Europäisches Patentamt

European Patent Office

Office européen des brevets

(19)

(11) Veröffentlichungsnummer: **0 278 990 B1**

(12) **EUROPÄISCHE PATENTSCHRIFT**

(45) Veröffentlichungstag der Patentschrift:
02.05.90

(21) Anmeldenummer: 87102128.3

(22) Anmeldetag: 14.02.87

(51) Int. Cl.⁴: **F02D 41/40,** F02D 41/10, F02D 41/26

(54) Verfahren zur Einstellung des Förderbeginns am Spritzversteller einer Einspritzpumpe einer luftverdichtenden Brennkraftmaschine.

(43) Veröffentlichungstag der Anmeldung:
24.08.88 Patentblatt 88/34

(45) Bekanntmachung des Hinweises auf die Patenterteilung:
02.05.90 Patentblatt 90/18

(84) Benannte Vertragsstaaten:
ES FR GB IT SE

(56) Entgegenhaltungen:
DE-A- 3 540 813
FR-A- 2 544 802
US-A- 4 346 688
US-A- 4 596 221

(73) Patentinhaber: **Daimler-Benz Aktiengesellschaft, Postfach 600202 Mercedesstrasse 136, D-7000 Stuttgart 60(DE)**

(72) Erfinder: **Mischke, Arthur, Prof. Dipl.-Ing., Hedelfinger Strasse 94, D-7302 Ostfildern 1(DE)**
Erfinder: **Scherer, Friedrich, Spessgertweg 39, D-7441 Unterensingen(DE)**
Erfinder: **Wagner, Wilhelm, Neue Strasse 60, D-7000 Stuttgart 1(DE)**

EP 0 278 990 B1

## Beschreibung

Die Erfindung bezieht sich auf ein Verfahren zur Einstellung des Förderbeginns am Spritzversteller einer Einspritzpumpe einer luftverdichtenden Brennkraftmaschine für den Antrieb eines Fahrzeuges mittels einer elektronischen Steuereinrichtung nach dem ersten Teil des Patentanspruches 1.

Ein derartiges Verfahren ist bekannt.

Gemäß der gattungsbildenden US-PS 4 346 688 wird mit Einleitung einer Beschleunigung der Brennkraftmaschine der Einspritzzeitpunkt nach "Spät" und in der anschließenden Hochlaufphase des Motors der Einspritzzeitpunkt exponentiell wieder nach "Früh" verlegt. Da die Hochlaufphase des Motors meistens unmittelbar nach der Verstellung des Gaspedals einsetzt, ist kaum ein genügend großer Zeitraum vorhanden, in dem sich die Verbrennung auf den veränderten Einspritzbeginn einstellen kann. Damit wird bei dem gattungsbildenden Verfahren der Geräuschentwicklung bereits wieder entgegengewirkt, bevor diese ihren niedrigsten Wert erreicht hat. Dieses Verfahren ist daher nicht geeignet, während der Beschleunigungsphase die Verbrennungsgeräusche in optimaler Weise zu reduzieren.

Bei dem Verfahren gemäß der US-PS 4 596 221 hängt die Änderung des Einspritzzeitpunktes vom Grad der Beschleunigung ab. Bei einer geringen Beschleunigung wird der Einspritzzeitpunkt nach "Spät" und bei einer großen Beschleunigung nach "Früh" verstellt. Der in Richtung "Spät" verlegte Einspritzzeitpunkt wird dabei unmittelbar nach der Verstellung wieder in Richtung "Früh" korrigiert (Figur 7).

Mit diesem Verfahren ist ebenfalls eine optimale Reduzierung der Verbrennungsgeräusche nicht zu erreichen.

Verursacht werden diese Geräusche durch eine Verlängerung des Zündverzuges infolge der sich bei Teillast stark auskühlenden Brennräume in Verbindung mit einer überhöhten Einspritzmenge.

Der Erfindung liegt daher die Aufgabe zu Grunde, das aus der US-PS 4 346 688 bekannte Verfahren so weiterzubilden, daß eine bestmögliche Beseitigung der in den Beschleunigungsphasen bzw. bei Einleitung einer plötzlichen Beschleunigung auftretenden Verbrennungsgeräusche erzielt wird. Die Aufgabe wird mit den Merkmalen aus dem Anspruch 1 gelöst.

Weitere Merkmale beinhaltet der abhängige Anspruch.

Das erfindungsgemäße Verfahren weist den Vorteil auf, daß durch eine Beeinflussung des Brennstoffeinspritzsystems während des Instationärbetriebs der Brennkraftmaschine eine Zunahme der Geräusch-Emission vermieden wird. Somit kann eine die Brennkraftmaschine umgebende Kapsel zur Dämpfung der Geräusch-Emission mit einer geringeren Wandstärke versehen werden, ohne daß deshalb die Emission verschlechtert ist. Darüber hinaus erfährt die Geräuschkapsel eine Gewichtsreduzierung, die bei der heutigen Leichtbauweise von Kraftfahrzeugen in allen Bereichen angestrebt wird. Schließlich ist noch von Vorteil, bei Dieselmotoren der Kraftstoffverbrauch gesenkt und eine Reduzierung der Schadstoffanteile im Abgas erzielt werden kann.

In der Zeichnung ist die Erfindung in drei beispielsweisen Ausführungsformen dargestellt. Es zeigt

Fig. 1 eine selbstzündende Brennkraftmaschine mit Nebenaggregaten und einer einen Mikroprozessor umfassenden Steuereinheit,

Fig. 2 den Verlauf einer Rückführung des Förderbeginns, schematisch dargestellt,

Fig. 3 ein in zwei Bereiche unterteilter Verlauf der Rückführung des Förderbeginns, schematisch dargestellt, und

Fig. 4 ein Programmablaufplan nach dem der Mikroprozessor der Steuereinheit eine Verstellung des Förderbeginns ermittelt.

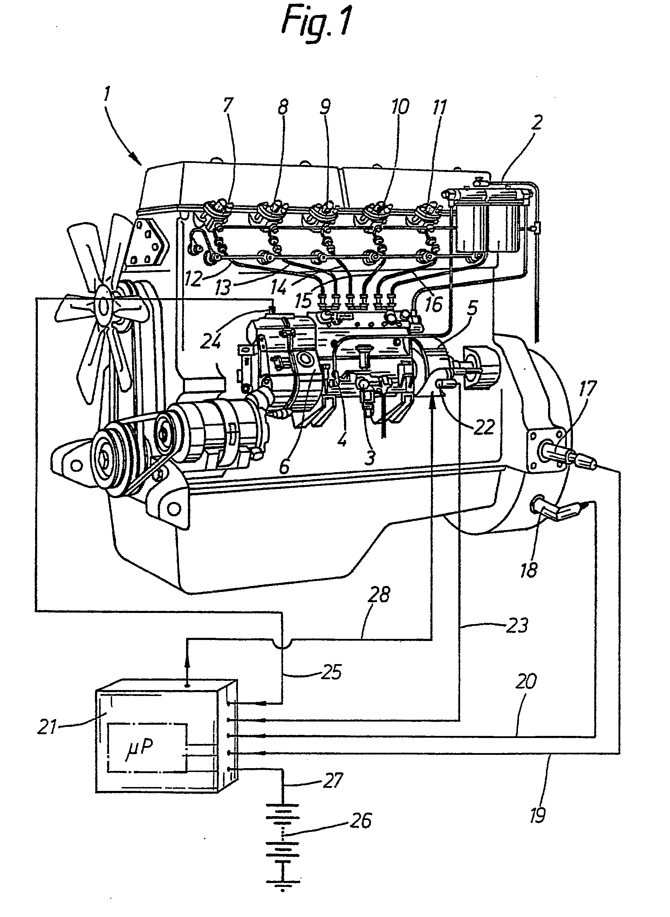

Eine in der Fig. 1 mit 1 bezeichnete Brennkraftmaschine umfaßt einen Brennstoff-Filter 2, eine Brennstoff-Förderpumpe 3, eine Einspritzpumpe 4, einen Spritzversteller 5 und einen Regler 6. Den nicht dargestellten Brennräumen der Brennkraftmaschine 1 sind Einspritzdüsen 7 - 11 zugeordnet, die durch Brennstoffleitungen 12 - 16 mit der mit der Einspritzpumpe 4 in Wirkverbindung stehen. Der nicht gezeigten Kurbelwelle der Brennkraftmaschine 1 ist ein oberer Totpunkt-Meßfühler 17 und ein die Kurbelwellendrehzahl erfassender Meßfühler 18 zugeordnet. Der Meßfühler 17 ist mit einer signalübertragenden Leitung 19 und der Meßfühler 18 mit einer signalübertragenden Leitung 20 mit einer Steuereinheit 21 verbunden. Die Steuereinheit 21 umfaßt einen Mikroprozessor. Mit einem dem Spritzversteller 5 zugeordneten Meßfühler 22 ist der Förderbeginn erfaßbar. Eine signalübertragende Leitung 23 verbindet den Meßfühler 22 mit der Steuereinheit 21. Mit einem dem Regler 6 zugeordneten Meßfühler 24 ist der Regelstangenweg erfaßbar. Eine signalübertragende Leitung 25 verbindet den Meßfühler 24 mit der Steuereinheit 21. Eine Leitung 27 verbindet die Steuereinheit 21 mit einer Spannungsquelle 26. Ein hilfskraftbetätigbarer dem Spritzversteller zugeordneter nicht gezeigter Stellantrieb steht mit der Steuereinheit 21 über eine Steuerleitung 28 in Wirkverbindung.

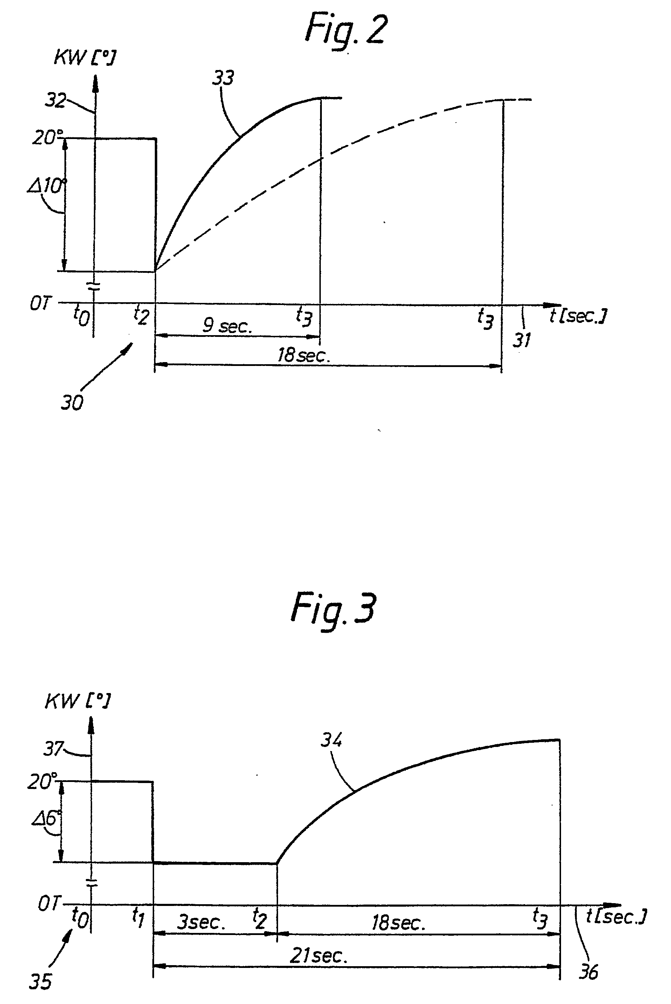

In der Fig. 2 ist in einem Diagramm ein Verlauf der Rückführung des Förderbeginn-Verstellwinkels schematisch dargestellt. Die graphische Darstellung der Funktion erfolgt in einem kartesischen Koordinatensystem 30. Auf der Abzisse 31 ist die Zeit in Sekunden aufgetragen und auf der Ordinate 32 der Förderbeginn-Verstellwinkel in Kurbelwellen-Grad (kw°). Zum Zeitpunkt $t_0$ ist ein Förderbeginn-Verstellwinkel von 20° KW eingestellt. Im Zeitpunkt $t_2$ erfolgt eine Beschleunigungseinleitung. Der Förderbeginn wird um 10° KW in Richtung 'Spät' verstellt. Während eines Korrekturzeitraumes $t_2$-$t_3$ von 9 Sekunden erfolgt eine Rückführung der Förderbeginn-Verstellung. Zum Zeitpunkt $t_3$ erreicht der Verlauf der Kurve 33, mit der die Rückführung erfolgt, einen statischen Förderbeginn-Verstellwinkel, der aufgrund der eingestellten Drehzahl zur Anwendung kommt. Die Kurve 33 beschriebende Funktion umfaßt einen Exponentialteil $\exp \frac{-t}{\tau}$, mit einer Zeitkonstante $\tau$, die 1/3 des Wertes des Zeitintervalles $t_2$-$t_3$ annimmt, und t ist der momentane Wert des Zeitintervalles $t_2$-$t_3$. In einer weiteren erfindungsgemäßen Ausgestaltung kann der Korrekturzeitraum $t_2$-$t_3$ auch 18 Sekunden lang sein. Die Zeitdauer für den Korrekturzeitraum $t_2$-$t_3$ beträgt für Brennkraftmaschinen mit kleinen Brennräumen etwa 2 Sekunden. Mit zunehmender Brennraumgröße erstreckt sich der Korrekturzeitraum $t_2$-$t_3$ bis zu einer Zeitdauer von etwa 30-50 Sekunden.

In der Fig. 3 ist in einem Diagramm ein in zwei Bereiche unterteilter Verlauf des Förderbeginn-Verstellwinkels schematisch dargestellt. Die graphische Darstellung der Kurve 34 erfolgt in einem kartesischen Koordinatensystem 35. Auf der Abzisse 36 ist die Zeit in Sekunden aufgetragen und auf der Ordinate 37 der Förderbeginn-Verstellwinkel in Kurbelwellen-Grad (kw°). Zum Zeitpunkt $t_0$ ist ein Förderbeginn-Verstellwinkel z.B. von 20° KW eingestellt. Zum Zeitpunkt $t_1$ erfolgt eine Beschleunigungseinleitung. Der Förderbeginn wird um beispielsweise 6° Kurbelwellen-Winkel in Richtung 'Spät' verstellt. Diese Vollverstellung wird für beispielsweise 3 Sekunden bis zum Zeitpunkt $t_2$ beibehalten. Vom Zeitpunkt $t_2$ bis zum Zeitpunkt $t_3$ erfolgt ausgehend von der Vollverstellung eine Rückführung des Förderbeginn-Verstellwinkels. Die Rückführung erfolgt nach einer Funktion mit einem Exponentialanteil $\exp \frac{-t}{\tau}$ mit $\tau$ als Zeitkonstante, die 1/3 des Wertes des Zeitintervalles $t_2$-$t_3$ annimmt und t ist der momentane Wert des Zeitintervalles $t_2$-$t_3$. Nach Ablauf des Zeitintervalles $t_2$-$t_3$ von beispielsweise 18 Sekunden erreicht die Kurve 34 zum Zeitpunkt $t_3$ den statischen Förderbeginn-Verstellwinkel, der aufgrund der eingestellten Drehzahl zur Anwendung kommt. Das Zeitintervall $t_2$-$t_3$ beträgt dann 21 Sekunden, mit dem ersten 3 Sekunden dauernden Zeitabschnitt, in dem der Förderbeginn konstant in Richtung 'Spät' verstellt ist und einem zweiten Zeitabschnitt $t_2$-$t_3$ mit 18 Sekunden, in dem die Rückführung des Förderbeginns abläuft.

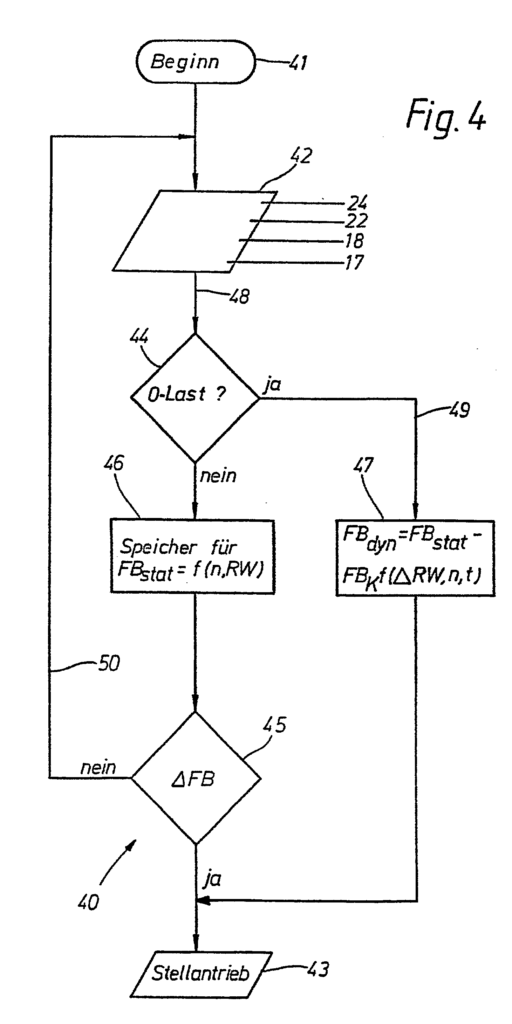

Ein Programmablaufplan 40, gemäß Fig. 4, umfaßt eine Grenzstelle 41, einen Eingabeblock 42, einen Ausgabeblock 43, Verzweigungsblöcke 44, 45 und Operationsblöcke 46, 47 die mit Flußlinien 48 - 50 verbunden sind. Dem Eingabeblock 42 werden die von Meßfühlern 17, 18, 22 und 24 erfaßten und den Brennkraftmaschinenbetrieb beeinflussende Faktoren zugeführt. Anhand der Daten ist ermittelbar, ob die gewünschte Leistungsabgabe der Brennkraftmaschine größer ist als die momentan von der Brennkraftmaschine abgegebene Leistung. Im Verzweigungsblock 44 wird überprüft, ob eine Laständerung von einem unteren Lastbereich in einen oberen Lastbereich vorliegt. Bei einer Laständerung von dem unteren Lastbereich in den oberen Lastbereich erfolgt eine Verzweigung zum Operationsblock 47, ansonsten zum Operationsblock 46. Das Ausgangssignal des Operationsblocks 46 ist ein aus einem Kennfeldspeicher ausgelesener statischer Förderbeginn-Verstellwinkel, der als Funktion der Kurbelwellendrehzahl der Brennkraftmaschine und des Regelstangenweges aus dem Kennfeldspeicher auslesbar ist und dem Verzweigungsblock 45 zugeführt wird. Der momentan eingestellte Förderbeginn-Verstellwinkel wird mit dem augenblicklich aus dem Operationsblock 46 zugeführten Förderbeginn-Verstellwinkel im Verzweigungsblock 45 verglichen. Besteht eine Abweichung vom momentan eingestellten zum augenblicklich aus dem Operationsblock 46 zugeführten Förderbeginn-Verstellwinkel, so erfolgt eine Verzweigung zum Ausgabeblock 43, der den Stellantrieb entsprechend des einzustellenden Förderbeginn-Verstellwinkels aktiviert. Sind die Förderbeginn-Verstellwinkel gleich, so erfolgt eine Verzweigung zum Eingabeblock 42.

Bei einer Verzweigung vom Verzweigungsblock 44 zum Operationsblock 47 wird in diesem ein dynamischer Förderbeginn-Verstellwinkel ermittelt.

Dazu wird aus dem Kennfeldspeicher ein als Funktion der Kurbelwellendrehzahl der Brennkraftmaschine und des Regelstangenweges statischer Förderbeginn-Verstellwinkel ausgelesen. Ein aus einem Festwertspeicher in Abhängigkeit der Regelstangenwegänderung und der Kurbelwellendrehzahl auslesbarer Förderbeginn Korrektur-Verstellwinkel wird von dem statischen Förderbeginn-Verstellwinkel subtrahiert. Der so ermittelte dynamische Förderbeginn-Verstellwinkel wird über der Verzweigungsstelle 45 dem Ausgabeblock 43 für den Stellantrieb zugeführt. Mit der Auslese des Korrektur-Verstellwinkels aus dem Festwertspeicher erhält man darüber hinaus noch die Information über die zeitliche Dauer des Korrekturzeitraums für die dynamische Förderbeginn-Verstellung. Die Rücknahme des Korrektur-Förderbeginn-Verstellwinkels erfolgt nach der Funktion

$$FB_{K(t)} = FB_K \cdot \exp \frac{-t}{\tau} \quad \text{mit}$$

$FB_{K(t)}$ ... der einzustellende Förderbeginn-Verstellwinkel in Grad Kurbelwellen-Winkel

$FB_K$ ... Korrektur-Förderbeginn-Verstellwinkel in Grad Kurbelwellen-Winkel

$\tau$ ... Zeitkonstante, mit einem Wert, der ein Drittel des Wertes des Zeitintervalles $t_2$-$t_3$ annimmt,

t ... ist der momentane Wert des Zeitintervalles $t_2$-$t_3$.

Nach Ablauf der Zeit t, für die zeitliche Dauer der dynamischen Förderbeginn-Verstellung, ist der statische Förderbeginn-Verstellwinkel eingestellt.

**Patentansprüche**

1. Verfahren zur Einstellung des Förderbeginns am Spritzversteller einer Einspritzpumpe einer luftverdichtenden Brennkraftmaschine für den Antrieb eines Fahrzeuges mittels einer elektronischen Steuereinheit, von der für jeden aus den Betriebsparametern Brennkraftmaschinen-Drehzahl, Regelstangenweg und Kurbelwellenstellungssignal ermittelten Lastzustand ein angepaßter Förderbeginnzeitpunkt durch Verstellung des Spritzverstellers in Richtung "Spät" oder "Früh" eingestellt wird und von der bei Änderung des Lastzustandes aus einem niederen in einen oberen Lastbereich der Förderbeginnzeitpunkt von der Steuereinheit zunächst auf einen in Richtung "Spät" liegenden Förderbeginnzeitpunkt verstellt und nachfolgend von diesem mit zeitlicher Verzögerung auf den dem veränderten Lastzustand angepaßt und in Richtung "Früh" liegenden Förderbeginnzeitpunkt nachgeführt wird, dadurch gekennzeichnet, daß der von der Steuereinheit (21) eingestellte Förderbeginn "Spät" innerhalb eines ersten Zeitabschnittes $t_1$–$t_2$ von etwa 2–20 Sekunden konstant bleibt, der darauffolgend in einem zweiten Zeitabschnitt $t_2$–$t_3$ entsprechend einer Exponentialfunktion auf den Förderbeginn des veränderten Lastzustandes eingestellt wird.

2. Verfahren nach Anspruch 1, dadurch gekennzeichnet, daß die Exponentialfunktion den Exponen-

ten $\dfrac{-t}{\tau}$ aufweist, wobei $\tau$ gleich 1/3 des Zeitintervalles $t_2$–$t_3$ und $t$ der momentane Wert des Zeitintervalles $t_2$–$t_3$ ist und daß der Wert des Zeitintervalls etwa 2–50 Sekunden beträgt.

## Claims

1. A method of adjusting the commencement of delivery at the timing mechanism of an injection pump of an air-compressing internal combustion engine for driving a vehicle by means of an electronic control unit by which, for every load condition ascertained from the operating parameters: engine speed, regulating rod travel and crank shaft position signal, an adapted delivery commencement point is adjusted by moving the timing mechanism in the "later" or "early" direction and by which, when the load condition varies from a lower into a higher load range, the delivery commencement point is adjusted by the control unit firstly to a delivery commencement point which is in the "later" direction and then subsequently, after a delay, is adjusted to a delivery commencement point in the "early" direction which is adapted to the altered load state, characterised in that the "late" commencement of delivery which is adjusted by the control unit (21) remains constant within an initial time period $t_1$–$t_2$ of about 2–20 seconds which is subsequently, in a second time interval $t_2$–$t_3$ adjusted to the commencement of delivery of the altered load state in accordance with an exponential function.

2. A method according to Claim 1, characterised in that the exponential function comprises the expo-

nent $\dfrac{-t}{\tau}$, wherein $\tau$ = 1/3 of the time interval $t_2$–$t_3$

and $t$ is the value at any given time of the time interval $t_2$–$t_3$ and in that the value of the time interval is about 2–50 seconds.

## Revendications

1. Procédé pour régler le début de l'injection dans le dispositif d'avance à l'injection d'une pompe d'injection d'un moteur à combustion interne utilisant une compression de l'air, pour l'entraînement d'un véhicule, à l'aide d'une unité de commande électronique, au moyen de laquelle, pour chaque état de charge déterminé à partir des paramètres de fonctionnement que sont la vitesse de rotation du moteur à combustion interne, la course de la tige de régulation et le signal de position du vilebrequin, un instant adapté de début de l'injection est réglé en direction d'un instant "tardif" ou "précoce" au moyen du réglage du dispositif d'avance à l'injection, et au moyen de laquelle, dans le cas d'une modification de l'état de charge depuis une gamme de charges inférieure dans une gamme de charges supérieure, l'instant du début de l'injection est réglé par l'unité de commande tout d'abord vers un instant "tardif", et est ensuite asservi, à partir de cet instant, avec un retard, sur l'instant de début de l'injection adapté à l'état de charge modifié et décalé vers un instant "précoce", caractérisé en ce que le début de l'injection "tardif", réglé par l'unité de commande (21), reste constant pendant un premier intervalle de temps ($t_1$–$t_2$) égal à environ 2–20 secondes, et qu'il est ensuite réglé, dans un second intervalle de temps ($t_2$–$t_3$), conformément à une fonction exponentielle, sur le début de l'injection pour l'état de charge modifié.

2. Procédé suivant la revendication 1, caractérisé en ce que la fonction exponentielle comporte l'exposant $-t/\tau$, $\tau$ étant égal à 1/3 de l'intervalle de temps $t_2$–$t_3$ et $t$ étant la valeur instantanée de l'intervalle de temps $t_2$–$t_3$, et que la valeur de l'intervalle de temps est égale à environ 2–50 secondes.

# Fig.1

# Fig. 2

# Fig. 3

Fig. 4

Beginn — 41

42

24
22
18
17

48

44 — 0-Last ?   ja — 49

46

nein

Speicher für
$FB_{stat} = f(n,RW)$

47

$FB_{dyn}=FB_{stat} - FB_K f(\triangle RW,n,t)$

50

nein — $\triangle FB$ — 45

40

ja

Stellantrieb — 43